# EUROPEAN PATENT APPLICATION

(11) **EP 4 173 901 A1**
(43) Date of publication of application: **03.05.2023**
(21) Application number: 21833870.5
(22) Date of filing: 08.06.2021
(51) Int. Cl.: B60S 1/62

(54) **NOZZLE, NOZZLE ASSEMBLY, AND CLEANER APPLIANCE**

(30) Priority: 30.06.2020 JP 2020112767; 07.07.2020 JP 2020117281
(71) Applicant: KOITO MANUFACTURING CO., LTD., Minato-ku Tokyo 108-8711 (JP)
(72) Inventor: MATSUNAGA Takahiro, Shizuoka-shi Shizuoka 424-8764 (JP)
(74) Representative: Algemeen Octrooi- en Merkenbureau B.V.
(86) International application number: PCT/JP2021/021728
(87) International publication number: WO 2022/004297

(57) **Abstract**

With a nozzle (20) of a cleaner device (10), a second camera (12) having a second convex surface (14) is cleaned. The nozzle (20) includes a second spray orifice (24) that is provided outside the second convex surface (14) and from which a cleaning fluid is sprayed in a fan shape onto the second convex surface (14). The shape of the second spray orifice (24) is set such that a sprayed cleaning fluid layer (28) of fan shape has a shape convexly curved toward the same direction as the second convex surface (14).

## Description

### [TECHNICAL FIELD]

The present invention relates to a nozzle and a cleaner device equipped with the nozzle. The present invention also relates to a nozzle assembly and a cleaner device equipped with the nozzle assembly.

### [BACKGROUND ART]

It is conventionally known that various cleaning devices, such as windshield washers for washing vehicle front windows and lamp cleaners for cleaning headlamps, are mounted on vehicles. Also, a user-friendly vehicle cleaner system has been proposed in which, in addition to such a cleaning device, a sensor cleaner for cleaning a vehicle-mounted sensor, such as a camera and LiDAR, is integrated (see Patent Literature 1, for example).

Patent Literature 1: WO2018/230558

### [SUMMARY OF INVENTION]

### [TECHNICAL PROBLEM]

The inventors of the present invention have studied the abovementioned vehicle cleaner system and recognized the following problems. Like the lens surface of a camera, for example, the object to be cleaned often has a convex surface, such as a spherical surface. If the nozzle is disposed in front of the object to be cleaned, a cleaning fluid will be certainly sprayed easily, but the nozzle may obstruct the view field of the object to be cleaned. To avoid this, the nozzle is sometimes disposed on a side of the object to be cleaned, for example, so that the cleaning fluid is sprayed sideways or obliquely from the nozzle toward the convex surface of the object to be cleaned. In this case, part of the cleaning fluid sprayed from the nozzle may miss the convex surface of the object to be cleaned and pass through near the object. The cleaning fluid that has missed and passed through the object to be cleaned does not contribute to the cleaning and is wasted. Since such cleaning fluid is merely sprayed to the surrounding area, there is also concern about scattering of the cleaning fluid therearound, especially when the cleaning fluid is liquid. A similar problem may occur not only in vehicle cleaner systems, but also in other general-purpose cleaner devices.

An embodiment of the present invention has been made in view of such a situation, and an illustrative purpose thereof is to provide a nozzle with which more cleaning fluid can be sprayed onto the object to be cleaned and also provide a cleaner device equipped with the nozzle.

If an external force is applied to a nozzle of a cleaner device, such as when a worker's hand accidentally touches the nozzle during assembly work, the nozzle may be displaced from its correct position depending on how the nozzle is fixed. If such positional displacement of the nozzle changes the spraying direction of the cleaning fluid from the nozzle, the cleaning fluid may be less likely to hit the object to be cleaned, which may hence not be cleaned properly.

An embodiment of the present invention has been made in view of such a situation, and an illustrative purpose thereof is to provide a nozzle assembly that has a structure for holding a spray orifice for a cleaning fluid at the correct position.

### [SOLUTION TO PROBLEM]

One aspect of the present invention relates to a nozzle of a cleaner device that cleans an object to be cleaned having a convex surface. The nozzle includes a spray orifice that is positioned outside the convex surface and from which a fan-shaped layer of a cleaning fluid is sprayed onto the convex surface. The spray orifice is shaped such that the sprayed fan-shaped layer of the cleaning fluid is convexly curved toward the same direction as the convex surface.

According to this aspect, the sprayed cleaning fluid layer of fan shape is conformed to the convex surface of the object to be cleaned, thereby spraying more cleaning fluid onto the object to be cleaned. Also, the amount of cleaning fluid scattering to the surrounding area without hitting the object to be cleaned can be reduced.

An upper edge and a lower edge of the spray orifice may be convexly curved toward a tip of the nozzle. This can make the sprayed cleaning fluid layer of fan shape to have a convexly curved shape easily.

The spray orifice may be positioned such that the fan-shaped layer of the cleaning fluid hits the convex surface at one side thereof with respect to a center of the convex surface and flows along the convex surface to pass over the center of the convex surface and reach the other side of the convex surface. In this case, the cleaning fluid can be made to flow over a relatively broad area of the convex surface, which leads to favorable cleaning of the object to be cleaned.

The spray orifice may be arranged such that circumferential ends of the sprayed fan-shaped layer of the cleaning fluid respectively travel toward points of a circumferential edge of the convex surface. In this case, the amount of cleaning fluid scattering to the outside of the circumferential edge of the convex surface can be reduced.

The nozzle may include a plurality of spray orifices, and each of the spray orifices may be positioned such that the fan-shaped layer of the cleaning fluid is sprayed therefrom onto a corresponding convex surface among a plurality of convex surfaces arranged around the nozzle. The spray orifices may be each shaped such that the sprayed fan-shaped layer of the cleaning fluid therefrom is convexly curved toward the same direction as the corresponding convex surface for that spray orifice. In this case, with the multiple spray orifices, multiple objects to be cleaned (or multiple regions in the same object to be cleaned) can be cleaned. For each spray orifice, the sprayed cleaning fluid layer of fan shape is conformed to the corresponding convex surface, thereby spraying more cleaning fluid onto the object to be cleaned. Also, the amount of cleaning fluid scattering to the surrounding area without hitting the object to be cleaned can be reduced.

Another aspect of the present invention relates to a cleaner device. The cleaner device may include the nozzle according to any one of the abovementioned aspects. The convex surface may be a surface of an optical element.

The cleaner device may be mounted on a vehicle. The optical element may constitute part of a vehicle-mounted device as the object to be cleaned.

A nozzle assembly of a cleaner device according to an aspect of the present invention is supported by a bracket to which an object to be cleaned is attached. The bracket includes either a first recess or a first projection. The nozzle assembly includes a fixing part fixed to the bracket at a region different from either the first recess or the first projection part of the bracket, and a second projection that is combined with the first recess of the bracket, or a second recess that is combined with the first projection of the bracket, to restrict a displacement of the nozzle assembly with respect to the object to be cleaned.

According to this aspect, the nozzle assembly is not only fixed to the bracket, to which the object to be cleaned is attached, but also combined with the recess (or the projection) of the bracket at the projection (or the recess) of the nozzle assembly, thereby minimizing the displacement of the nozzle assembly with respect to the object to be cleaned. Therefore, positional displacement of the nozzle caused by an accidental external force is prevented or adequately restrained, so that the nozzle can be held at the correct position.

The nozzle assembly may include a first nozzle provided as the fixing part and including a first spray orifice for a cleaning fluid, and a second nozzle connected to the first nozzle and including a second spray orifice for the cleaning fluid. Either the second projection or the second recess may be formed on the second nozzle. In this case, the first nozzle is fixed to the bracket, and the second nozzle is combined with the recess (or the projection) of the bracket at the projection (or the recess) of the second nozzle, so that both the first nozzle and the second nozzle can be held at the correct positions.

The nozzle assembly may include a nozzle including a first spray orifice and a second spray orifice from each of which a cleaning fluid is sprayed in a different direction, and a nozzle holder to which the nozzle is attached and that includes the fixing part. Either the second projection or the second recess is formed on the nozzle holder. In this case, the nozzle holder is fixed to the bracket and also combined with the recess (or the projection) of the bracket at the projection (or the recess) of the nozzle holder. Since the nozzle provided with the first spray orifice and the second spray orifice is attached to such a nozzle holder, each of the spray orifices can be retained at the correct position with respect to the corresponding object to be cleaned.

The second projection of the nozzle assembly and the first recess of the bracket may not be fixed to each other. Alternatively, the second recess of the nozzle assembly and the first projection of the bracket may not be fixed to each other. In this case, the projection part (or the recess part) and the recess part (or the projection part) have only to be combined without being fixed to each other, which facilitates the assembly work.

Yet another aspect of the present invention relates to a cleaner device. The cleaner device may include the nozzle assembly according to any one of the abovementioned aspects.

The cleaner device may be mounted on a vehicle. The object to be cleaned may be a vehicle-mounted device.

### [ADVANTAGEOUS EFFECTS OF INVENTION]

An embodiment of the present invention enables spraying more cleaning fluid onto an object to be cleaned. Also, an embodiment of the present invention provides a nozzle assembly that has a structure for holding a spray orifice for a cleaning fluid at the correct position.

### [BRIEF DESCRIPTION OF THE DRAWINGS]

FIG. 1 is a front view that schematically illustrates a cleaner device according to an embodiment;
FIG. 2 is a perspective view that schematically illustrates the attachment state of a nozzle assembly of the cleaner device shown in FIG. 1;
FIGS. 3A and 3B are perspective views that each schematically illustrate a first spray orifice of the nozzle and a cleaning liquid layer of fan shape sprayed from the first spray orifice onto a first convex surface of a first camera;
FIGS. 4A and 4B are perspective views that each schematically illustrate a second spray orifice of the nozzle and a cleaning liquid layer of fan shape sprayed from the second spray orifice onto a second convex surface of a second camera;
FIG. 5 is a front view that schematically illustrates a cleaner device according to another embodiment;
FIG. 6 is a diagram that schematically illustrates a cross section of a second nozzle unit shown in FIG. 5 taken along line A-A;
FIG. 7 is a front view that schematically illustrates a cleaner device according to an embodiment;
FIG. 8A is a perspective view that schematically illustrates a state where the nozzle assembly of the cleaner device shown in FIG. 7 is attached to a bracket, and FIG. 8B is a partial sectional view in which the second nozzle unit of the nozzle assembly shown in FIG. 8A is partially cut out;
FIG. 9 is a perspective view that schematically illustrates the bracket shown in FIG. 8A to which the nozzle assembly is not attached;
FIG. 10 is a perspective view that schematically illustrates the back side of the nozzle assembly shown in FIG. 8A;
FIG. 11A shows a cross section taken along line F-F shown in FIG. 8A, and FIG. 11B shows a cross section taken along line G-G shown in FIG. 11A;
FIG. 12 is a front view that schematically illustrates a cleaner device according to another embodiment;
FIG. 13A is a perspective view that schematically illustrates a state where the nozzle assembly of the cleaner device shown in FIG. 12 is attached to a bracket, and FIG. 13B is a partial sectional view in which the nozzle assembly shown in FIG. 13A is partially cut out;
FIG. 14 is a perspective view that illustrates the bracket shown in FIG. 13A to which the nozzle assembly is not attached;
FIG. 15 is a perspective view that schematically illustrates the back side of the nozzle assembly shown in FIG. 13A; and
FIG. 16 shows a cross section taken along line A-A shown in FIG. 13A.

### [DESCRIPTION OF EMBODIMENTS]

In the following, the present invention will be described based on preferred embodiments with reference to the drawings. The embodiments are intended to be illustrative only and not to limit the invention, so that it should be understood that not all of the features or combinations thereof described in the embodiments are necessarily essential to the invention. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Also, the terms "first", "second", and the like used in the present specification or claims do not imply any order or degree of importance and are employed to distinguish one configuration from another. Further, in each drawing, part of a member less important in describing embodiments may be omitted.

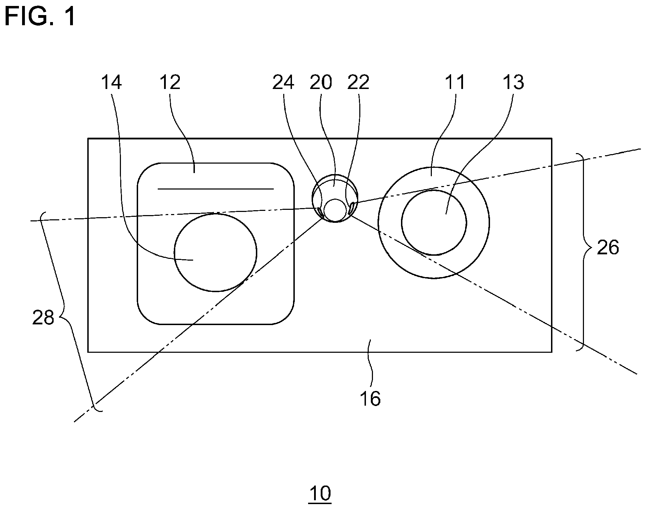

FIG. 1 is a front view that schematically illustrates a cleaner device 10 according to an embodiment. In the present embodiment, the cleaner device 10 shown in FIG. 1 is a vehicle cleaner device mounted on a vehicle such as an automobile.

The cleaner device 10 is configured to clean multiple objects to be cleaned, such as a first camera 11 and a second camera 12. The first camera 11 and the second camera 12 may be arranged side-by-side and adjacent to each other, for example, as illustrated. The first camera 11 and the second camera 12 are installed in different orientations to capture images in different directions, such as in front of and behind the vehicle. As illustrated, in this example, the first camera 11 and the second camera 12 have different outer shapes, i.e., the first camera 11 has a circular shape and the second camera 12 has a square shape.

As the surfaces to be cleaned by the cleaner device 10, the first camera 11 has a first convex surface 13, and the second camera 12 has a second convex surface 14. These convex surfaces are surfaces of externally exposed optical elements, which are constituting elements of the cameras. The optical elements may be, for example, lenses, translucent lens covers for protecting the lenses, or other optical elements. The first convex surface 13 and the second convex surface 14 may also have different shapes depending on the design and specification of each camera.

Each convex surface may be part of a spherical surface, for example. The convex surface may also be any other quadric surface, such as a paraboloid, or may be a curved surface of another shape convexly curved outward, such as an aspherical surface. The convex surface is not limited to a surface of which the entirety is curved. The convex surface may be shaped to appear convex as a whole toward the outside and may partially include a flat area.

The cleaner device 10 includes a nozzle 20, in which multiple spray orifices, such as a first spray orifice 22 and a second spray orifice 24, are provided from which a cleaning liquid is sprayed in directions different from each other. Each of the multiple spray orifices is provided such that the cleaning liquid is sprayed therefrom onto a corresponding convex surface among multiple convex surfaces arranged around the nozzle 20. In specific, the first spray orifice 22 is provided such that the cleaning liquid is sprayed therefrom onto the first convex surface 13, and the second spray orifice 24 is provided such that the cleaning liquid is sprayed therefrom onto the second convex surface 14.

To prevent interference with the image capturing by the first camera 11 and the second camera 12 or to minimize the influence on the image capturing, the nozzle 20 is disposed outside the view fields of the cameras, such as on a side of the first camera 11 and the second camera 12. The first spray orifice 22 is provided outside the first convex surface 13, and the second spray orifice 24 is provided outside the second convex surface 14.

In the present embodiment, the nozzle 20 is provided between the first camera 11 and the second camera 12. As shown in FIG. 1, the first camera 11 is provided to the right of the nozzle 20, and the second camera 12 is provided to the left of the nozzle 20, when viewed from the front. The first convex surface 13 is positioned on one side with respect to the nozzle 20, and the second convex surface 14 is positioned on the other side with respect to the nozzle 20. Accordingly, the first spray orifice 22 and the second spray orifice 24 are provided on the nozzle 20 such that the cleaning liquid is sprayed therefrom in directions almost opposite to each other. The tip of the nozzle 20 has a conical shape, and the first spray orifice 22 and the second spray orifice 24 open on a side surface of the conical tip. The first spray orifice 22 and the second spray orifice 24 are provided respectively on one side and the other side with respect to the center of the nozzle 20.

The first spray orifice 22 is configured such that the cleaning liquid is sprayed therefrom in a fan shape onto the first convex surface 13, and the second spray orifice 24 is configured such that the cleaning liquid is sprayed therefrom in a fan shape onto the second convex surface 14. To facilitate understanding, FIG. 1 shows a cleaning liquid layer 26 of fan shape sprayed from the first spray orifice 22 onto the first convex surface 13 and also shows a cleaning liquid layer 28 of fan shape sprayed from the second spray orifice 24 onto the second convex surface 14.

Also, as will be detailed later, the shape of one or both of the first spray orifice 22 and the second spray orifice 24 may be set such that the sprayed cleaning liquid layer of fan shape has a shape convexly curved toward the same direction as the corresponding convex surface. In the present embodiment, for example, the shape of the second spray orifice 24 is set such that the sprayed cleaning liquid layer 28 of fan shape has a shape convexly curved toward the same direction as the second convex surface 14.

As shown in FIG. 1, the first camera 11, the second camera 12, and an area around the nozzle 20 are covered with a cover member 16. Therefore, the components of the cleaner device 10 other than the nozzle 20 are covered with the cover member 16.

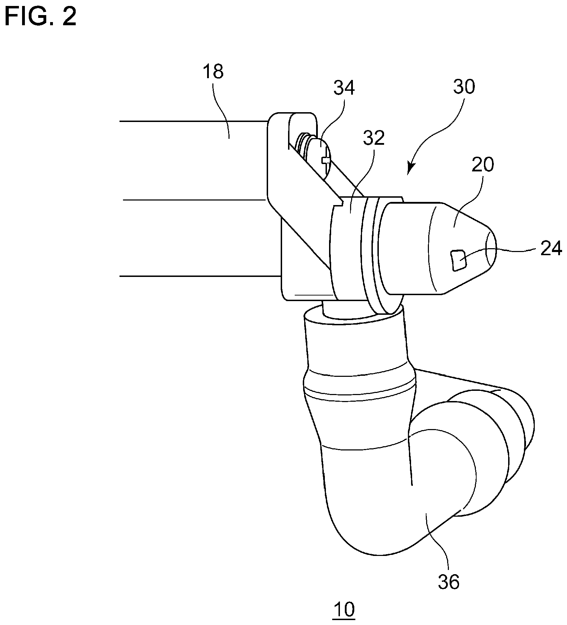

FIG. 2 is a perspective view that schematically illustrates the attachment state of a nozzle assembly 30 of the cleaner device 10 shown in FIG. 1. FIG. 2 illustrates a state where the cover member 16 shown in FIG. 1 has been removed. Accordingly, FIG. 2 shows the nozzle assembly 30 viewed from the second spray orifice 24 side of the nozzle 20, along with part of a bracket 18 disposed behind the cover member 16.

The nozzle assembly 30 includes the nozzle 20 and a nozzle holder 32. The nozzle 20 is attached to the nozzle holder 32. The nozzle 20 and the nozzle holder 32 are formed of an appropriate synthetic resin material, such as polyacetal resin, acrylic resin, and polycarbonate resin.

The nozzle holder 32 is fixed to the bracket 18 with a screw 34, for example. The nozzle holder 32 may be fixed to the bracket 18 by other fixing means. As described previously, since the cleaner device 10 in the present embodiment is a vehicle cleaner device, the nozzle assembly 30 is supported by the vehicle body via the bracket 18. Although not shown in the figure, to the bracket 18, the first camera 11 and the second camera 12 may also be attached, besides the nozzle assembly 30.

To the nozzle holder 32, a connection hose 36 is connected. The connection hose 36 is connected to a flow path for the cleaning liquid within the nozzle holder 32, which is further connected to the first spray orifice 22 and the second spray orifice 24 through an internal flow path of the nozzle 20. The connection hose 36 is also connected to a cleaning liquid supply source, including a cleaning liquid tank and a pump for sending the cleaning liquid from the tank.

Accordingly, when the cleaner device 10 is in operation, the cleaning liquid is provided from the cleaning liquid supply source to the first spray orifice 22 and the second spray orifice 24 through the connection hose 36 and the internal flow paths of the nozzle holder 32 and the nozzle 20, so as to be sprayed from the first spray orifice 22 and the second spray orifice 24. Therefore, as shown in FIG. 1, the cleaning liquid layer 26 of fan shape is sprayed from the first spray orifice 22 onto the first convex surface 13, and the cleaning liquid layer 28 of fan shape is sprayed from the second spray orifice 24 onto the second convex surface 14.

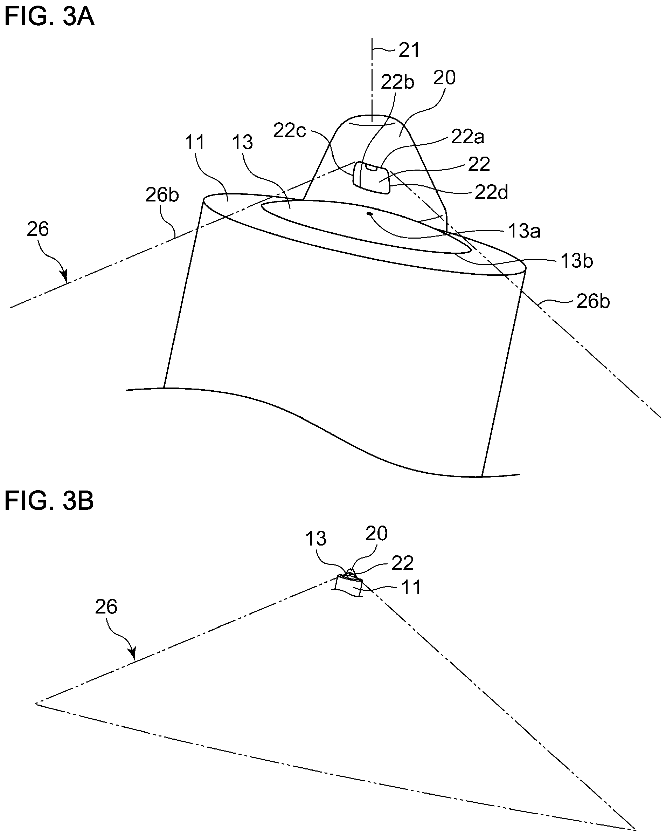

FIGS. 3A and 3B are perspective views that each schematically illustrate the first spray orifice 22 of the nozzle 20 and the cleaning liquid layer 26 of fan shape sprayed from the first spray orifice 22 onto the first convex surface 13 of the first camera 11. FIG. 3A shows a magnified view of the first spray orifice 22, along with the first convex surface 13 and the cleaning liquid layer 26, viewed from the direction in which the first convex surface 13 of the first camera 11 is positioned closer to the viewer than the first spray orifice 22 of the nozzle 20. FIG. 3B shows the shape of the cleaning liquid layer 26 when the nozzle 20 is viewed from the same direction but from a viewpoint more distant than that in FIG. 3A. In FIGS. 3A and 3B, a central axis 21 of the nozzle 20 is shown to indicate a vertical direction, for the sake of convenience.

The first camera 11 is installed at a slight tilt with respect to the central axis 21 of the nozzle 20, and the first convex surface 13 is also slightly inclined with respect to a plane perpendicular to the central axis 21. As illustrated, the first convex surface 13 is gently inclined toward the lower right. The first convex surface 13 includes a center 13a and a circumferential edge 13b. Since the first convex surface 13 is convexly curved outward (upward in FIG. 3A) as described above, the center 13a projects outward (upward) with respect to the circumferential edge 13b. In this example, the center 13a corresponds to the apex of the first convex surface 13, which projects most outward, and the circumferential edge 13b draws a circle around the center 13a. The first convex surface 13 is a gently curved surface, and the height of the center 13a with respect to the circumferential edge 13b is smaller than the radius of the circumferential edge 13b.

The first spray orifice 22 includes an upper edge 22a, a lower edge 22b, a left edge 22c, and a right edge 22d, which are linear in shape, and has a rectangular shape with rounded corners as a whole. The upper edge 22a and the lower edge 22b are connected to each other by the left edge 22c and the right edge 22d. The upper edge 22a and the lower edge 22b are longer than the left edge 22c and the right edge 22d, so that the first spray orifice 22 is laterally long.

In order to conform the cleaning liquid layer 26 of fan shape sprayed from the first spray orifice 22 to the first convex surface 13 disposed to be inclined as described above, the first spray orifice 22 has a similar inclined shape. Accordingly, as with the first convex surface 13, the upper edge 22a and the lower edge 22b are gently inclined toward the lower right. Since the upper edge 22a and the lower edge 22b of the first spray orifice 22 extend almost parallel with each other, the cleaning liquid layer 26 of fan shape sprayed from the first spray orifice 22 forms a planar liquid layer as shown in FIG. 3B.

The first spray orifice 22 is provided on a side (the farther side from the viewer in FIG. 3A) of the first convex surface 13 and positioned slightly higher than the first convex surface 13. The upper edge 22a and the lower edge 22b of the first spray orifice 22 are positioned higher than the center 13a of the first convex surface 13. Therefore, the cleaning liquid layer 26 is sprayed obliquely downward from the first spray orifice 22 toward the first convex surface 13.

The first spray orifice 22 is also provided such that the cleaning liquid layer 26 of fan shape sprayed therefrom hits the first convex surface 13 at one side (the farther side from the viewer in FIG. 3A) with respect to the center 13a of the first convex surface 13 and flows along the first convex surface 13 to pass over the center 13a of the first convex surface 13 and reach the other side (the closer side from the viewer in FIG. 3A). In this way, the cleaning liquid can be made to flow over a relatively broad area of the first convex surface 13 (such as almost the entire area of the first convex surface 13), which leads to favorable cleaning of the first convex surface 13.

Also, from the inner side toward the outer side of the first spray orifice 22 in the nozzle 20, the interval between the left edge 22c and the right edge 22d of the first spray orifice 22 becomes gradually larger. With such lateral widening of the first spray orifice 22, the cleaning liquid layer 26 sprayed from the first spray orifice 22 also laterally spreads to form a fan shape.

The first spray orifice 22 is configured such that both ends 26b of the sprayed cleaning liquid layer 26 of fan shape respectively travel toward points on the circumferential edge 13b of the first convex surface 13. As shown in FIG. 3A, the both ends 26b of the cleaning liquid layer 26 of fan shape sprayed from the first spray orifice 22 pass over the circumferential edge 13b of the first convex surface 13 such as to respectively draw tangent lines, so to speak, from the left edge 22c and the right edge 22d, so as to be sprayed onto the first convex surface 13. Therefore, the amount of cleaning liquid scattering to the outside of the circumferential edge 13b of the first convex surface 13 can be reduced.

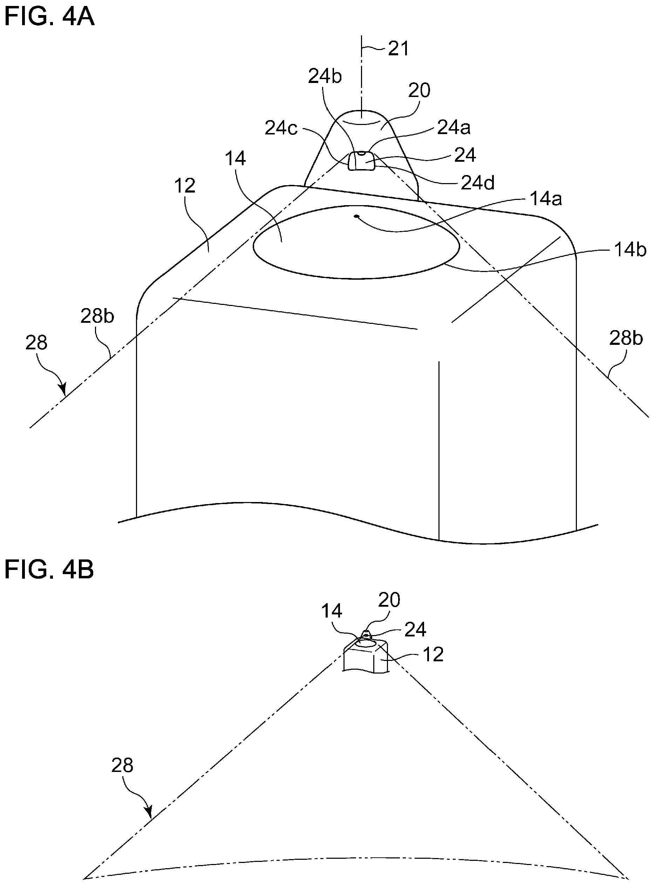

FIGS. 4A and 4B are perspective views that each schematically illustrate the second spray orifice 24 of the nozzle 20 and the cleaning liquid layer 28 of fan shape sprayed from the second spray orifice 24 onto the second convex surface 14 of the second camera 12. FIG. 4A shows a magnified view of the second spray orifice 24, along with the second convex surface 14 and the cleaning liquid layer 28, viewed from the direction in which the second convex surface 14 of the second camera 12 is positioned closer to the viewer than the second spray orifice 24 of the nozzle 20. FIG. 4B shows the shape of the cleaning liquid layer 28 when the nozzle 20 is viewed from the same direction but from a viewpoint more distant than that in FIG. 4A. In FIGS. 4A and 4B, the central axis 21 of the nozzle 20 is shown to indicate a vertical direction, for the sake of convenience.

The second camera 12 is installed along the central axis 21 of the nozzle 20, and the second convex surface 14 is disposed along a plane perpendicular to the central axis 21. The second convex surface 14 includes a center 14a and a circumferential edge 14b. Since the second convex surface 14 is convexly curved outward (upward in FIG. 4A) as described above, the center 14a projects outward (upward) with respect to the circumferential edge 14b. In this example, the center 14a corresponds to the apex of the second convex surface 14, which projects most outward, and the circumferential edge 14b draws a circle around the center 14a. The second convex surface 14 is a gently curved surface, and the height of the center 14a with respect to the circumferential edge 14b is smaller than the radius of the circumferential edge 14b.

The shape of the second spray orifice 24 is set such that the sprayed cleaning liquid layer 28 of fan shape has a shape convexly curved toward the same direction as the second convex surface 14. Accordingly, an upper edge 24a and a lower edge 24b of the second spray orifice 24 are convexly curved toward the tip of the nozzle 20. This can make the sprayed cleaning liquid layer 28 of fan shape to have a convexly curved shape easily, as shown in FIG. 4B.

The second spray orifice 24 also includes a left edge 24c and a right edge 24d, which are linear in shape, and the upper edge 24a and the lower edge 24b are connected to each other by the left edge 24c and the right edge 24d. The upper edge 24a and the lower edge 24b are longer than the left edge 24c and the right edge 24d, so that the second spray orifice 24 is laterally long.

The second spray orifice 24 is provided on a side (the farther side from the viewer in FIG. 4A) of the second convex surface 14 and positioned slightly higher than the second convex surface 14. The upper edge 24a and the lower edge 24b of the second spray orifice 24 are positioned higher than the center 14a of the second convex surface 14. Therefore, the cleaning liquid layer 28 is sprayed obliquely downward from the second spray orifice 24 toward the second convex surface 14.

The second spray orifice 24 is also provided such that the cleaning liquid layer 28 of fan shape sprayed therefrom hits the second convex surface 14 at one side (the farther side from the viewer in FIG. 4A) with respect to the center 14a of the second convex surface 14 and flows along the second convex surface 14 to pass over the center 14a of the second convex surface 14 and reach the other side (the closer side from the viewer in FIG. 4A). In this way, the cleaning liquid can be made to flow over a relatively broad area of the second convex surface 14 (such as almost the entire area of the second convex surface 14), which leads to favorable cleaning of the second convex surface 14.

Also, from inner side toward the outer side of the second spray orifice 24 in the nozzle 20, the interval between the left edge 24c and the right edge 24d of the second spray orifice 24 becomes gradually larger. With such lateral widening of the second spray orifice 24, the cleaning liquid layer 28 sprayed from the second spray orifice 24 also laterally spreads to form a fan shape.

The second spray orifice 24 is configured such that both ends 28b of the sprayed cleaning liquid layer 28 of fan shape respectively travel toward points on the circumferential edge 14b of the second convex surface 14. As shown in FIG. 4A, the both ends 28b of the cleaning liquid layer 28 of fan shape sprayed from the second spray orifice 24 pass over the circumferential edge 14b of the second convex surface 14 such as to respectively draw tangent lines, so to speak, from the left edge 24c and the right edge 24d, so as to be sprayed onto the second convex surface 14. Therefore, the amount of cleaning liquid scattering to the outside of the circumferential edge 14b of the second convex surface 14 can be reduced.

As described above, the nozzle 20 of the cleaner device 10 according to the embodiment includes the second spray orifice 24 that is provided outside the second convex surface 14 and from which the cleaning liquid is sprayed in a fan shape onto the second convex surface 14. The shape of the second spray orifice 24 is set such that the sprayed cleaning liquid layer 28 of fan shape has a shape convexly curved toward the same direction as the second convex surface 14. Thus, the sprayed cleaning liquid layer 28 of fan shape is conformed to the second convex surface 14 of the second camera 12, thereby spraying more cleaning liquid onto the second convex surface 14. Also, although the cleaning liquid will locally hit a convex surface if the cleaning liquid is sprayed linearly from a spray orifice, by spraying the cleaning liquid in a fan shape, the cleaning liquid can be sprayed onto the entire convex surface easily.

Also, if the cleaning liquid layer 28 of fan shape is planar, only the center part of the liquid layer may directly hit near the center 14a of the second convex surface 14 and the ends of the liquid layer may pass above the circumferential edge 14b of the second convex surface 14 without hitting the second convex surface 14, so that the liquid may be likely to scatter to the surrounding area. In the embodiment, however, since the cleaning liquid layer 28 of fan shape is actually convexly curved as with the second convex surface 14, the entire cleaning liquid layer 28 can be made to directly hit the second convex surface 14, so that such scattering of the cleaning liquid can be reduced.

The curved shapes of the upper edge 24a and the lower edge 24b of the second spray orifice 24 are not necessarily required to be visually checked directly. Depending on the design, such as the size and shapes of the nozzle 20, the second spray orifice 24, and the corresponding second convex surface 14, the curved shapes of the upper edge 24a and the lower edge 24b of the second spray orifice 24 may be visually checked when viewed under magnification with a magnifying glass.

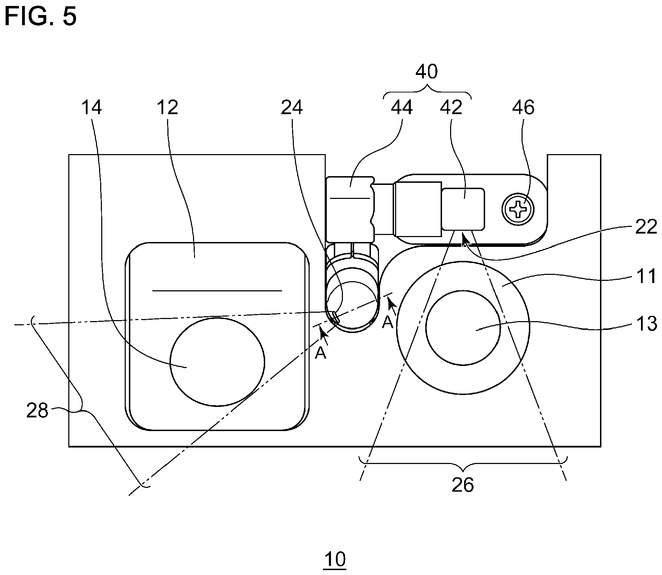

FIG. 5 is a front view that schematically illustrates the cleaner device 10 according to another embodiment. The cleaner device 10 shown in FIG. 5 and the cleaner device 10 shown in FIG. 1 are different with respect to the nozzle configuration but are the same in other respects.

The cleaner device 10 includes a nozzle assembly 40 in which a first nozzle unit or nozzle body 42 with the first spray orifice 22 and a second nozzle unit or nozzle body 44 with the second spray orifice 24 are provided. The first nozzle unit 42 is fixed to a support member, such as a bracket, with a screw 46. The first nozzle unit 42 may be fixed to the support member by other fixing means. The second nozzle unit 44 is connected to the first nozzle unit 42. The cleaning liquid is supplied from a supply source, such as a tank, to the first nozzle unit 42 and also to the second nozzle unit 44 via the first nozzle unit 42. The cleaning liquid supplied to the first nozzle unit 42 is sprayed from the first spray orifice 22, and the cleaning liquid supplied to the second nozzle unit 44 is sprayed from the second spray orifice 24.

The first spray orifice 22 is provided such that the cleaning liquid is sprayed therefrom onto the first convex surface 13 of the first camera 11, and the second spray orifice 24 is provided such that the cleaning liquid is sprayed therefrom onto the second convex surface 14 of the second camera 12. The first nozzle unit 42 is disposed above the first camera 11, and, from the first spray orifice 22, the cleaning liquid is sprayed downward toward the first convex surface 13. The second nozzle unit 44 is disposed between the first camera 11 and the second camera 12, and, from the second spray orifice 24, the cleaning liquid is sprayed obliquely downward toward the second convex surface 14.

The first spray orifice 22 is configured such that the cleaning liquid is sprayed therefrom in a fan shape onto the first convex surface 13, and the second spray orifice 24 is configured such that the cleaning liquid is sprayed therefrom in a fan shape onto the second convex surface 14. To facilitate understanding, FIG. 5 shows the cleaning liquid layer 26 of fan shape sprayed from the first spray orifice 22 onto the first convex surface 13 and also shows the cleaning liquid layer 28 of fan shape sprayed from the second spray orifice 24 onto the second convex surface 14.

As is the case in the embodiment described with reference to FIG. 1, the shape of one or both of the first spray orifice 22 and the second spray orifice 24 may be set such that the sprayed cleaning liquid layer of fan shape has a shape convexly curved toward the same direction as the corresponding convex surface. In the present embodiment, for example, the shape of the second spray orifice 24 is set such that the sprayed cleaning liquid layer 28 of fan shape has a shape convexly curved toward the same direction as the second convex surface 14. As an example, the shape of the second spray orifice 24 may be the same as described with reference to FIGS. 4A and 4B.

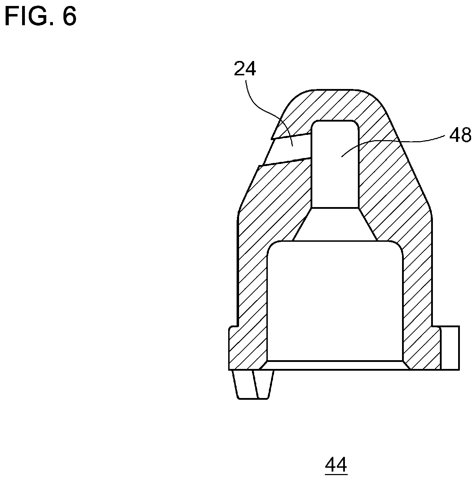

FIG. 6 is a diagram that schematically illustrates a cross section of the second nozzle unit 44 shown in FIG. 5 taken along line A-A. In the second nozzle unit 44, an internal flow path 48 of which the diameter decreases toward the nozzle tip is formed. The second spray orifice 24 is provided such as to be bent at an almost right angle from a small-diameter portion of the internal flow path 48 on the tip side. However, as described with reference to FIG. 4A, since the second spray orifice 24 is provided slightly higher than the second convex surface 14, the second spray orifice 24 is provided to extend obliquely downward slightly such as to direct the cleaning liquid toward the second convex surface 14.

As described above, the second nozzle unit 44 of the cleaner device 10 according to the embodiment includes the second spray orifice 24 that is provided outside the second convex surface 14 and from which the cleaning liquid is sprayed in a fan shape onto the second convex surface 14. The shape of the second spray orifice 24 is set such that the sprayed cleaning liquid layer 28 of fan shape has a shape convexly curved toward the same direction as the second convex surface 14. Thus, the sprayed cleaning liquid layer 28 of fan shape is conformed to the second convex surface 14 of the second camera 12, thereby spraying more cleaning liquid onto the second convex surface 14. Also, the amount of cleaning liquid scattering to the surrounding area without hitting the second convex surface 14 can be reduced.

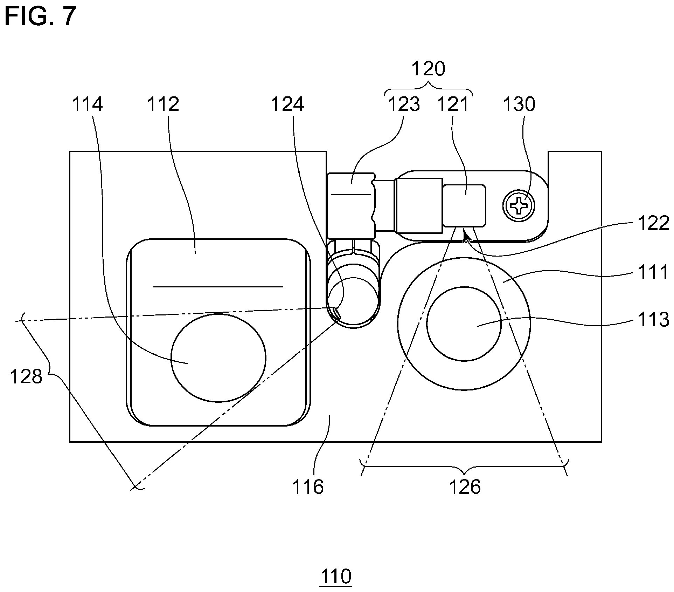

FIG. 7 is a front view that schematically illustrates a cleaner device 110 according to an embodiment. In the present embodiment, the cleaner device 110 shown in FIG. 7 is a vehicle cleaner device mounted on a vehicle such as an automobile.

The cleaner device 110 is configured to clean multiple objects to be cleaned, such as a first camera 111 and a second camera 112. The first camera 111 and the second camera 112 may be arranged side-by-side and adjacent to each other, for example, as illustrated. The first camera 111 and the second camera 112 are installed in different orientations to capture images in different directions, such as in front of and behind the vehicle. As illustrated, in this example, the first camera 111 and the second camera 112 have different outer shapes, i.e., the first camera 111 has a circular shape and the second camera 112 has a square shape.

As the surfaces to be cleaned by the cleaner device 110, the first camera 111 has a first surface 113, and the second camera 112 has a second surface 114. These surfaces to be cleaned are surfaces of externally exposed optical elements, which are constituting elements of the cameras. The optical elements may be, for example, lenses, translucent lens covers for protecting the lenses, or other optical elements. Each of the first surface 113 and the second surface 114 may be a curved surface convexly curved outward, such as a spherical surface, or may be a surface of another shape, such as a plane. The first surface 113 and the second surface 114 may have the same shape but may generally have shapes different from each other depending on the design and specification of each camera.

The cleaner device 110 includes a nozzle assembly 120 in which a first nozzle unit or nozzle body 121 with a first spray orifice 122 and a second nozzle unit or nozzle body 123 with a second spray orifice 124 are provided. As an example, the nozzle assembly 120 may have a substantial L-shape in which the first nozzle unit 121, which is horizontally long, and the second nozzle unit 123, which is vertically long, are connected with each other, as illustrated in FIG. 7. The cleaning liquid is supplied from a supply source, such as a tank, to the first nozzle unit 121 and also to the second nozzle unit 123 via the first nozzle unit 121. The cleaning liquid supplied to the first nozzle unit 121 is sprayed from the first spray orifice 122, and the cleaning liquid supplied to the second nozzle unit 123 is sprayed from the second spray orifice 124. The first spray orifice 122 is provided such that the cleaning liquid is sprayed therefrom onto the first surface 113, and the second spray orifice 124 is provided such that the cleaning liquid is sprayed therefrom onto the second surface 114.

The first spray orifice 122 is configured such that the cleaning liquid is sprayed therefrom in a fan shape onto the first surface 113, and the second spray orifice 124 is configured such that the cleaning liquid is sprayed therefrom in a fan shape onto the second surface 114. To facilitate understanding, FIG. 7 shows a cleaning liquid layer 126 of fan shape sprayed from the first spray orifice 122 onto the first surface 113 and also shows a cleaning liquid layer 128 of fan shape sprayed from the second spray orifice 124 onto the second surface 114.

Also, to prevent interference with the image capturing by the first camera 111 and the second camera 112 or to minimize the influence on the image capturing, the nozzle assembly 120 is disposed outside the view fields of the cameras. As an example, the first nozzle unit 121 is disposed above the first camera 111, and, from the first spray orifice 122, the cleaning liquid is sprayed downward toward the first surface 113. The second nozzle unit 123 is disposed between the first camera 111 and the second camera 112, and, from the second spray orifice 124, the cleaning liquid is sprayed obliquely downward toward the second surface 114.

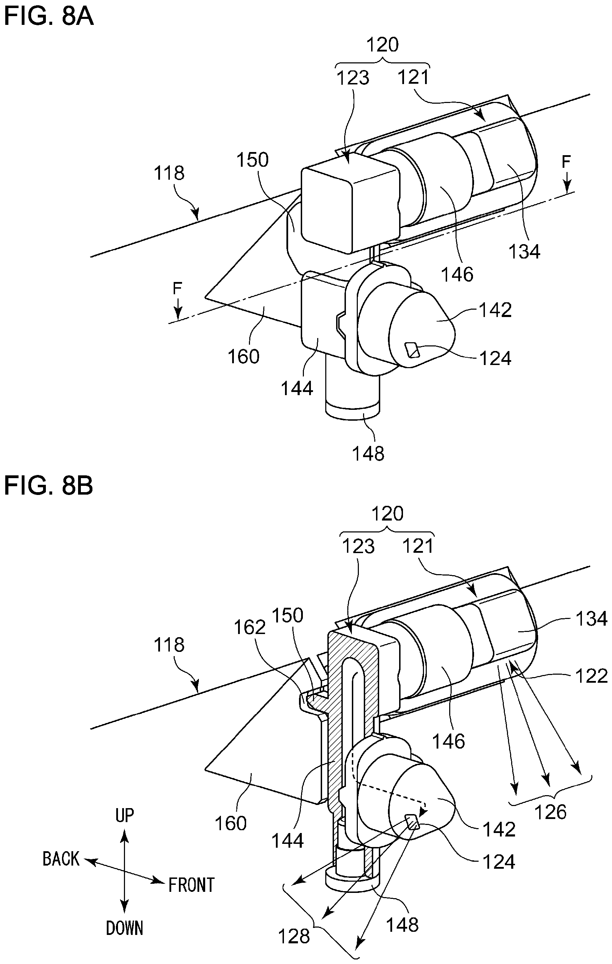

As shown in FIG. 7, the first camera 111, the second camera 112, and an area around the nozzle assembly 120 are covered with a cover member 116. Behind the cover member 116, a support member for supporting the first camera 111, the second camera 112, and the nozzle assembly 120 is provided, such as a bracket 118 shown in FIG. 8A. To the bracket 118, the first camera 111, the second camera 112, and the nozzle assembly 120 are attached. As described previously, since the cleaner device 110 in the present embodiment is a vehicle cleaner device, the first camera 111, the second camera 112, and the nozzle assembly 120 are supported by the vehicle body via the bracket 118.

The first nozzle unit 121 not only has the role of spraying the cleaning liquid onto the first surface 113 of the first camera 111, but also serves as a fixing part for fixing the nozzle assembly 120 to the bracket 118. The first nozzle unit 121 is fixed to the bracket 118 with a screw 130 as a fixing member, for example. Alternatively, the first nozzle unit 121 may be fixed to the bracket 118 or any other support member by other fixing means.

Each component of the nozzle assembly 120 and the bracket 118 are formed of an appropriate synthetic resin material, such as polyacetal resin, acrylic resin, and polycarbonate resin. Each component of the nozzle assembly 120 and the bracket 118 are formed of the same material, for example, but may be formed of different materials.

As will be described later with reference to FIGS. 8A through 11B, the nozzle assembly 120 is configured to be combined with the bracket 118 to restrict or minimize the displacement of the nozzle assembly 120 with respect to objects to be cleaned (i.e., the first camera 111 and the second camera 112). The first nozzle unit 121 is fixed to the bracket 118, and the second nozzle unit 123 is connected to the first nozzle unit 121, so that a displacement regulating structure of the nozzle assembly 120 is formed by the second nozzle unit 123 and the bracket 118. Although the second nozzle unit 123 is not directly fixed to the bracket 118, convex and concave shapes, which are combined with each other, are provided as the displacement regulating structure on the second nozzle unit 123 and the bracket 118 such as to restrain the movement of the nozzle assembly 120 with respect to the bracket 118.

FIG. 8A is a perspective view that schematically illustrates a state where the nozzle assembly 120 of the cleaner device 110 shown in FIG. 7 is attached to the bracket 118, and FIG. 8B is a partial sectional view in which the second nozzle unit 123 of the nozzle assembly 120 shown in FIG. 8A is partially cut out. FIGS. 8A and 8B each show the nozzle assembly 120 along with part of the bracket 118 viewed from the second spray orifice 124 side of the second nozzle unit 123, in a state where the cover member 116 shown in FIG. 7 has been removed. FIG. 8B also shows a vertical cross section of the second nozzle unit 123.

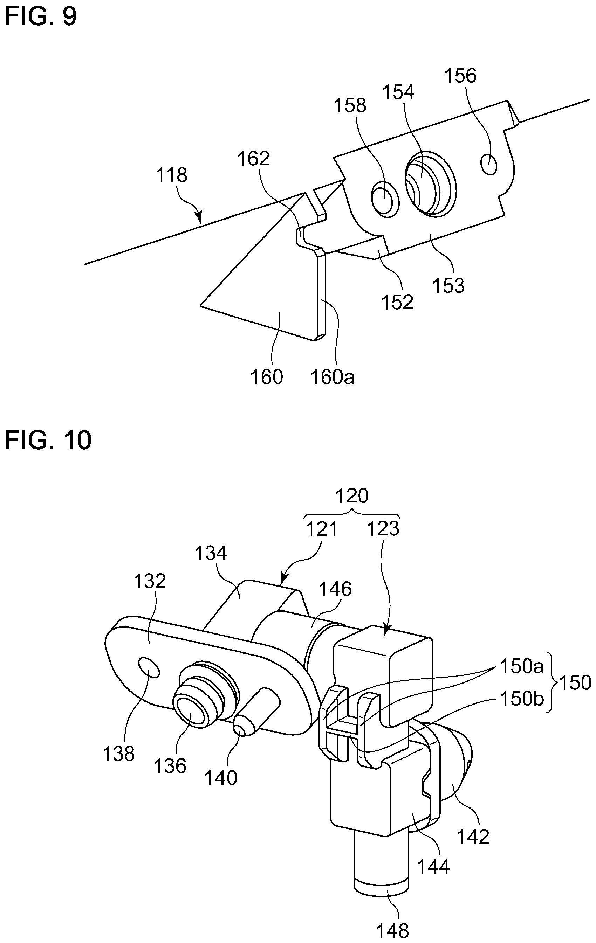

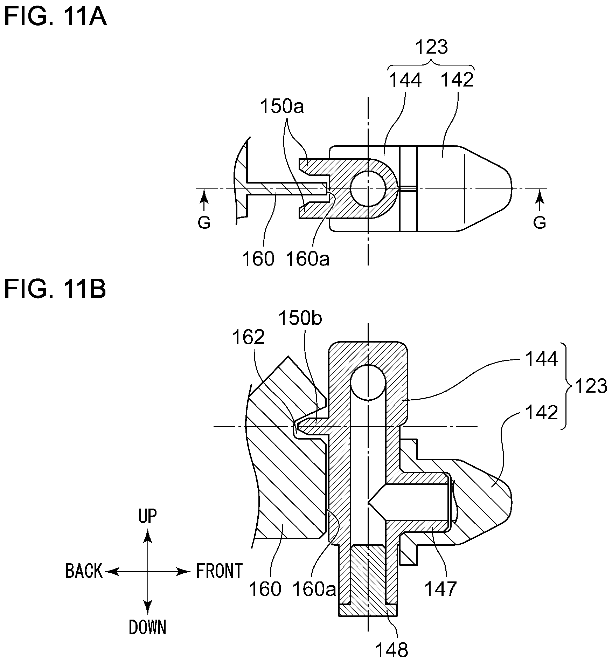

FIG. 9 is a perspective view that illustrates the bracket 118 shown in FIG. 8A, to which the nozzle assembly 120 is not attached. FIG. 10 is a perspective view that schematically illustrates the back side of the nozzle assembly 120 shown in FIG. 8A. FIG. 11A shows a cross section taken along line F-F shown in FIG. 8A, and FIG. 11B shows a cross section taken along line G-G shown in FIG. 11A.

For example, as shown in FIG. 10, the first nozzle unit 121 includes a base plate part 132, which is laterally long, a spray part 134 formed on a center area of the front surface of the base plate part 132, and an inlet part 136 formed on a center area of the back surface of the base plate part 132. On the spray part 134, the first spray orifice 122 shown in FIG. 7 is provided. Also, the internal flow path for leading the cleaning liquid to the first spray orifice 122 and the second nozzle unit 123 is formed from the inlet part 136 to the spray part 134 through the base plate part 132.

Also, on the base plate part 132 of the first nozzle unit 121, a screw hole 138 is formed on one side with respect to the spray part 134, and a positioning pin 140 is formed on the opposite side with respect to the spray part 134. The screw hole 138 penetrates from the front surface to the back surface of the base plate part 132. The positioning pin 140 is a rod-shaped projection protruding from the back surface of the base plate part 132.

The second nozzle unit 123 includes a nozzle 142 provided with the second spray orifice 124, and a nozzle holder 144 that is vertically long. The nozzle holder 144 includes a connection part 146 for connecting the second nozzle unit 123 to the first nozzle unit 121, and a nozzle holding part 147 shown in FIG. 11B. The connection part 146 is formed on an upper part of a side surface of the nozzle holder 144 and press-fitted into the spray part 134 of the first nozzle unit 121, for example, so that the second nozzle unit 123 is joined to the first nozzle unit 121. The nozzle holding part 147 is formed on a center area of the front surface of the nozzle holder 144, for example. The nozzle 142 is press-fitted into the nozzle holding part 147, for example, and thereby attached to the nozzle holder 144. In the nozzle holder 144, an internal flow path for leading the cleaning liquid from the connection part 146 to the nozzle holding part 147 is formed. Therefore, the cleaning liquid can be made to flow from the spray part 134 of the first nozzle unit 121 to the second spray orifice 124 of the nozzle 142 through the internal flow path in the nozzle holder 144. To prevent the cleaning liquid flowing through the internal flow path in the nozzle holder 144 from flowing out through an opening at the lower end of the nozzle holder 144, a cap 148 is attached to the lower end of the nozzle holder 144 such as to plug the opening.

The nozzle holder 144 also includes a projection part 150 as the displacement regulating structure described previously, and the projection part 150 is formed on a center area of the back surface of the nozzle holder 144, for example. As illustrated in FIG. 10, the projection part 150 in the present embodiment has an H-shape and includes two first vertical ribs 150a and a horizontal rib 150b that connects the first vertical ribs 150a at center areas thereof.

As shown in FIG. 9, the bracket 118 includes an attachment part 152 projecting frontward. The attachment part 152 includes an attachment surface 153 that comes into contact with the back surface of the base plate part 132 of the first nozzle unit 121 when the first nozzle unit 121 is attached. On a center area of the attachment surface 153, a flow path 154 opens, and, with respect to the flow path 154, a screw hole 156 is formed on one side, and a positioning hole 158 is formed on the opposite side with respect to the flow path 154. The flow path 154 is connected to a cleaning liquid supply source (not illustrated) including a cleaning liquid tank and a pump for sending the cleaning liquid from the tank.

The bracket 118 also includes a second vertical rib 160 projecting frontward. The second vertical rib 160 is formed at a position corresponding to the back of the second nozzle unit 123 when the nozzle assembly 120 is attached to the bracket 118. On the second vertical rib 160, a recess part 162 is provided as the displacement regulating structure described previously. The recess part 162 is formed on a front end surface 160a of the second vertical rib 160 such as to be combined with the projection part 150 of the nozzle holder 144 to restrict the displacement of the second nozzle unit 123 in at least one direction.

By fixing the first nozzle unit 121 to the attachment part 152 of the bracket 118, the nozzle assembly 120 is fixed to the bracket 118. At the time, the positioning pin 140 of the first nozzle unit 121 is inserted into the positioning hole 158 of the bracket 118, and the inlet part 136 of the first nozzle unit 121 is fitted into the flow path 154 of the bracket 118. Thereafter, the screw 130 (see FIG. 7) is screwed into the screw hole 138 of the first nozzle unit 121 and the screw hole 156 of the bracket 118, so that the first nozzle unit 121 is fixed to the attachment part 152 of the bracket 118. Thus, since the nozzle assembly 120 can be fixed to the bracket 118 with a single screw 130, the assembly work is relatively easy.

When the nozzle assembly 120 is fixed to the bracket 118, the projection part 150 of the second nozzle unit 123 is inserted into the recess part 162 of the bracket 118, as shown in FIGS. 8B, 11A, and 11B. Thus, the projection part 150 and the recess part 162 are combined with each other. Since the recess part 162 is a cutout formed on the second vertical rib 160, the projection part 150 is vertically sandwiched between portions of the second vertical rib 160 within the recess part 162. At the time, there may be a small gap between the projection part 150 and the recess part 162, or the projection part 150 and the recess part 162 may be in contact with each other at least partially on their surfaces. Accordingly, when an external force acts on the nozzle assembly 120 (the second nozzle unit 123, for example) in a vertical direction, the projection part 150 of the second nozzle unit 123 comes into contact with the second vertical rib 160 within the recess part 162, thereby regulating displacement or movement of the second nozzle unit 123 in the vertical directions with respect to the bracket 118.

The projection part 150 of the nozzle assembly 120 and the recess part 162 of the bracket 118 are not fixed to each other. Accordingly, the projection part 150 and the recess part 162 have only to be combined without being fixed to each other, which facilitates the assembly work.

The front end surface 160a of the second vertical rib 160, on which the recess part 162 is provided, faces the back surface of the second nozzle unit 123, on an area below the recess part 162. There may be a small gap between the front end surface 160a of the second vertical rib 160 and the back surface of the second nozzle unit 123, or the front end surface 160a and the back surface of the second nozzle unit 123 may be in contact with each other. When the nozzle assembly 120 (the second nozzle unit 123, for example) is pressed from the front toward the back side, the second nozzle unit 123 comes into contact with the front end surface 160a of the second vertical rib 160, thereby regulating displacement or movement of the second nozzle unit 123 in the front and back directions with respect to the bracket 118.

As illustrated in FIG. 11A, the two first vertical ribs 150a of the projection part 150 are arranged apart on both sides of the second vertical rib 160 of the bracket 118 respectively and are not in contact with the second vertical rib 160. Therefore, displacement of the second nozzle unit 123 in the left and right directions with respect to the bracket 118 is allowed. Alternatively, however, displacement or movement of the second nozzle unit 123 in the left and right directions with respect to the bracket 118 may be restricted or minimized by bringing the projection part 150 and the recess part 162 into contact or sufficiently close together such that the two first vertical ribs 150a sandwich the second vertical rib 160.

By fixing the nozzle assembly 120 to the bracket 118, the flow path 154 of the bracket 118 is connected to the first spray orifice 122 through the internal flow path of the first nozzle unit 121. In addition, the flow path 154 is also connected to the second spray orifice 124 through the internal flow paths of the first nozzle unit 121 and the second nozzle unit 123. Accordingly, when the cleaner device 110 is in operation, the cleaning liquid is provided from the cleaning liquid supply source to the first spray orifice 122 and the second spray orifice 124 through the flow path 154, the first nozzle unit 121, and the second nozzle unit 123, so as to be sprayed from the first spray orifice 122 and the second spray orifice 124 (in FIG. 8B, flows of cleaning liquid are schematically indicated by arrows). Therefore, the cleaning liquid layer 126 of fan shape is sprayed from the first spray orifice 122 onto the first surface 113 of the first camera 111, and the cleaning liquid layer 128 of fan shape is sprayed from the second spray orifice 124 onto the second surface 114 of the second camera 112. Thus, the cleaner device 110 as shown in FIG. 7 can clean the first camera 111 and the second camera 112 with the cleaning liquid.

Meanwhile, an external force could be applied to the nozzle assembly 120 when, for example, a worker's hand accidentally touches the nozzle assembly 120 during the assembly work of the nozzle assembly 120 or a nearby device. If such an accidental external force is large, unintended movement or positional displacement of the nozzle assembly 120 may occur. Also, if a region of the nozzle assembly 120, such as the second nozzle unit 123, on which such an accidental external force acts is relatively distant from the fixing part of the nozzle assembly 120 fixed to the bracket 118, i.e., the first nozzle unit 121, the torque applied by the external force will be greater, which may cause unintended movement or positional displacement of the nozzle assembly 120. In this way, the first spray orifice 122 or the second spray orifice 124 (especially the second spray orifice) may be displaced from the correct position. If such positional displacement of a spray orifice changes the spraying direction of the cleaning liquid from a nozzle, the cleaning fluid may be less likely to hit the first camera 111 or the second camera 112, which may hence not be cleaned properly.

To address the issue, the nozzle assembly 120 of the cleaner device 110 according to the embodiment includes the fixing part, i.e., the first nozzle unit 121, fixed to the bracket 118 at a region different from the recess part 162 of the bracket 118 and also includes the projection part 150 that is combined with the recess part 162 of the bracket 118 to restrict the displacement of the nozzle assembly 120 with respect to the first camera 111 and the second camera 112. The projection part 150 is formed on the second nozzle unit 123.

Thus, the nozzle assembly is not only fixed to the bracket 118, to which the first camera 111 and the second camera 112 are attached, but also combined with the recess part 162 of the bracket 118 at the projection part 150, thereby regulating displacement of the nozzle assembly 120 with respect to the first camera 111 and the second camera 112. Therefore, positional displacement of the first spray orifice 122 and the second spray orifice 124 caused by an accidental external force is prevented or adequately restrained. With the simple structure of the combination of the projection part 150 and the recess part 162, the first spray orifice 122 and the second spray orifice 124 can be held at the correct positions.

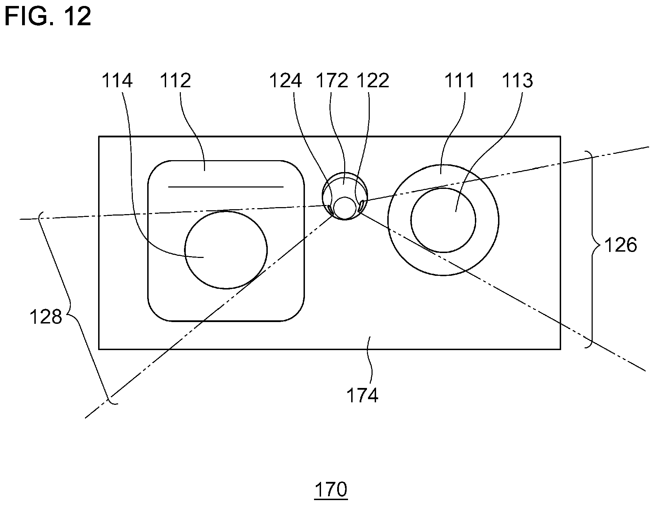

There will now be described a cleaner device 170 according to another embodiment with reference to FIGS. 12-16. The cleaner device 170 and the aforementioned cleaner device 110 shown in FIG. 7 have a feature in common of being provided to clean the first camera 111 and the second camera 112 but are different with respect to the nozzle configuration and the displacement regulating structure.

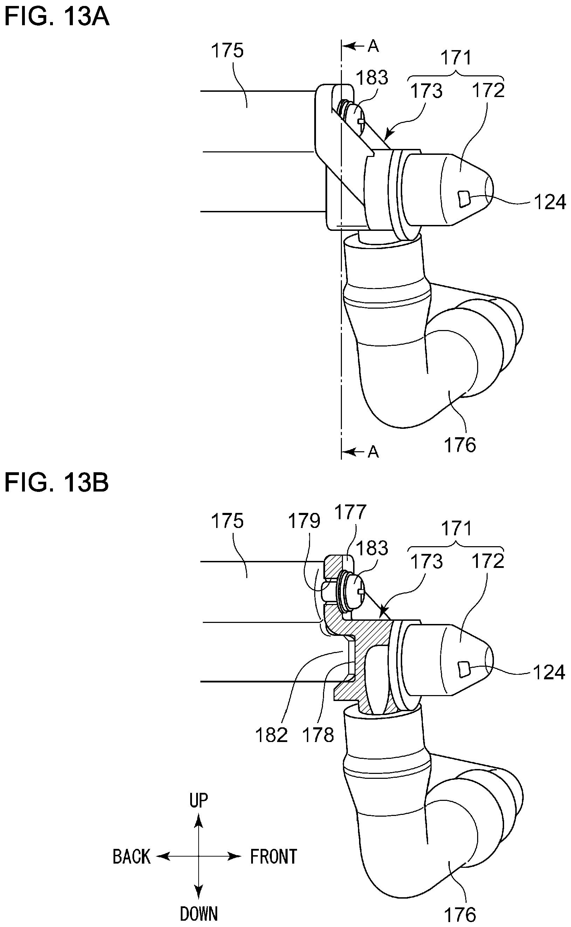

FIG. 12 is a front view that schematically illustrates the cleaner device 170 according to another embodiment. FIG. 13A is a perspective view that schematically illustrates a state where a nozzle assembly 171 of the cleaner device 170 shown in FIG. 12 is attached to a bracket 175, and FIG. 13B is a partial sectional view in which the nozzle assembly 171 shown in FIG. 13A is partially cut out. FIGS. 13A and 13B each show the nozzle assembly 171 along with part of the bracket 175 in a state where a cover member 174 shown in FIG. 12 has been removed.

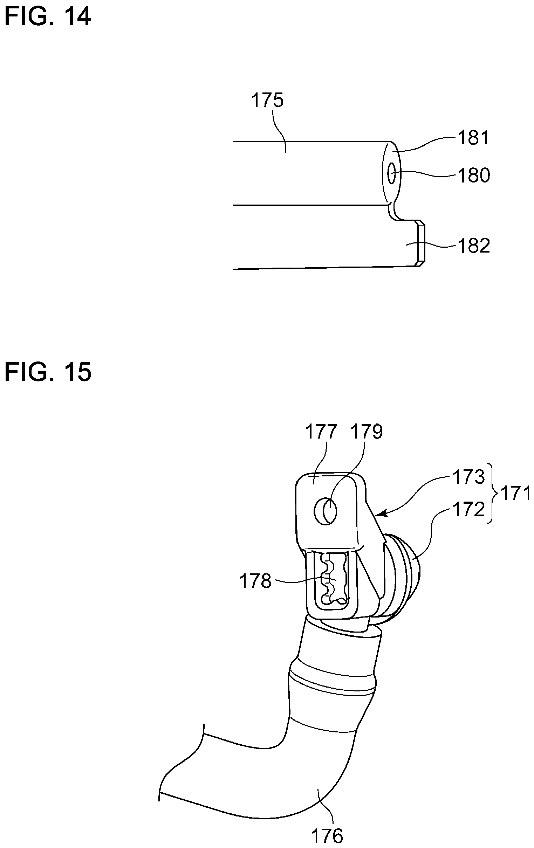

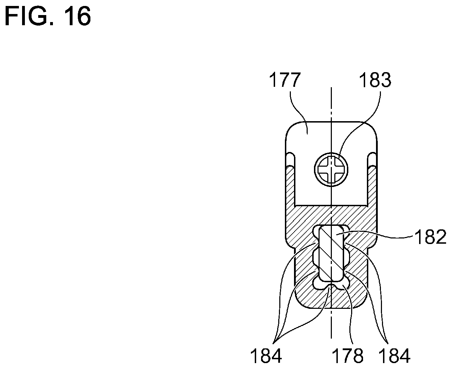

Also, FIG. 14 is a perspective view that illustrates the bracket 175 shown in FIG. 13A, to which the nozzle assembly 171 is not attached. FIG. 15 is a perspective view that schematically illustrates the back side of the nozzle assembly 171 shown in FIG. 13A. FIG. 16 shows a cross section taken along line A-A shown in FIG. 13A.

The cleaner device 170 includes a nozzle 172, in which multiple spray orifices, such as a first spray orifice 122 and a second spray orifice 124, are provided from which a cleaning liquid is sprayed in directions different from each other. The first spray orifice 122 is provided such that the cleaning liquid is sprayed therefrom onto the first surface 113 of the first camera 111, and the second spray orifice 124 is provided such that the cleaning liquid is sprayed therefrom onto the second surface 114 of the second camera 112.

In the present embodiment, the nozzle 172 is provided between the first camera 111 and the second camera 112. As shown in FIG. 12, the first camera 111 is provided to the right of the nozzle 172, and the second camera 112 is provided to the left of the nozzle 172, when viewed from the front. Accordingly, the first spray orifice 122 and the second spray orifice 124 are provided on the nozzle 172 such that the cleaning liquid is sprayed therefrom in directions almost opposite to each other. The tip of the nozzle 172 has a conical shape, and the first spray orifice 122 and the second spray orifice 124 open on a side surface of the conical tip. The first spray orifice 122 and the second spray orifice 124 are provided respectively on one side and the other side with respect to the center of the nozzle 172.

The first spray orifice 122 is configured such that the cleaning liquid is sprayed therefrom in a fan shape onto the first surface 113, and the second spray orifice 124 is configured such that the cleaning liquid is sprayed therefrom in a fan shape onto the second surface 114. To facilitate understanding, FIG. 12 shows a cleaning liquid layer 126 of fan shape sprayed from the first spray orifice 122 onto the first surface 113 and also shows a cleaning liquid layer 128 of fan shape sprayed from the second spray orifice 124 onto the second surface 114.

As shown in FIG. 12, the first camera 111, the second camera 112, and an area around the nozzle 172 are covered with a cover member 174. Behind the cover member 174, a support member for supporting the first camera 111, the second camera 112, and the nozzle assembly 171 is provided, such as a bracket 175 shown in FIG. 13A. To the bracket 175, the first camera 111, the second camera 112, and the nozzle assembly 171 are attached. As described above, since the cleaner device 170 in the present embodiment is a vehicle cleaner device, the first camera 111, the second camera 112, and the nozzle assembly 171 are supported by the vehicle body via the bracket 175.

As shown in FIGS. 13A and 13B, the nozzle assembly 171 includes the nozzle 172 and a nozzle holder 173. The nozzle 172 is attached to the front surface of the nozzle holder 173. The nozzle 172 and the nozzle holder 173 are formed of an appropriate synthetic resin material, such as polyacetal resin, acrylic resin, and polycarbonate resin. Also, to a lower end of the nozzle holder 173, a connection hose 176 is connected. The connection hose 176 is connected to a flow path for the cleaning liquid within the nozzle holder 173, which is further connected to the first spray orifice 122 and the second spray orifice 124 through an internal flow path of the nozzle 172. The connection hose 176 is also connected to a cleaning liquid supply source, including a cleaning liquid tank and a pump for sending the cleaning liquid from the tank.

Accordingly, when the cleaner device 170 is in operation, the cleaning liquid is provided from the cleaning liquid supply source to the first spray orifice 122 and the second spray orifice 124 through the connection hose 176 and the internal flow paths of the nozzle holder 173 and the nozzle 172, so as to be sprayed from the first spray orifice 122 and the second spray orifice 124. Therefore, as shown in FIG. 12, the cleaning liquid layer 126 of fan shape is sprayed from the first spray orifice 122 onto the first surface 113, and the cleaning liquid layer 128 of fan shape is sprayed from the second spray orifice 124 onto the second surface 114. Thus, the cleaner device 170 can clean the first camera 111 and the second camera 112 with the cleaning liquid.

Also, as shown in FIG. 15, for example, the nozzle holder 173 includes a fixing part 177, and a recess part 178 as the displacement regulating structure. The fixing part 177 is formed at an upper end of the nozzle holder 173, in which a screw hole 179 penetrates from the front surface to the back surface. The recess part 178 is formed on the back surface of the nozzle holder 173 on the opposite side from the nozzle 172.

As shown in FIG. 14, the bracket 175 includes an attachment part 181 on which a screw hole 180 is formed, and a projection part 182 as the displacement regulating structure. The projection part 182 is provided such as to project frontward with respect to the attachment part 181. The projection part 182 is configured such as to be combined with the recess part 178 of the nozzle holder 173 to restrict the displacement of the nozzle assembly 171 in at least one direction. Unlike the bracket 118 shown in FIG. 9, the bracket 175 is not provided with a flow path for the cleaning liquid.

A screw 183 as a fixing member, for example, is screwed into the screw hole 179 of the fixing part 177 and the screw hole 180 of the attachment part 181, so that the fixing part 177 of the nozzle holder 173 is fixed to the attachment part 181 of the bracket 175. At the time, the projection part 182 of the bracket 175 is inserted into the recess part 178 of the nozzle holder 173, so that the projection part 182 and the recess part 178 are combined with each other. Thus, the nozzle assembly 171 is fixed to the bracket 175. There may be a small gap between the projection part 182 and the recess part 178, or the projection part 182 and the recess part 178 may be in contact with each other at least partially on their surfaces. When an external force acts on the nozzle assembly 171 in a vertical direction, the nozzle holder 173 comes into contact with the projection part 182 of the bracket 175 within the recess part 178, thereby regulating displacement or movement of the nozzle assembly 171 in the vertical directions with respect to the bracket 175. Similarly, displacement of the nozzle assembly 171 in the left and right directions and the front and back directions with respect to the bracket 175 is also restricted.

Also, when the projection part 182 is placed within the recess part 178, the projection part 182 comes into contact with projections 184 formed within the recess part 178, as shown in FIG. 16. With the projection part 182 in contact with the projections 184 within the recess part 178, the nozzle assembly 171 can be positioned with respect to the bracket 175, thereby accurately positioning the first spray orifice 122 and the second spray orifice 124 with respect to the first camera 111 and the second camera 112, respectively.

As described above, the nozzle assembly 171 of the cleaner device 170 according to the embodiment includes the fixing part 177 fixed to the bracket 175 at a region different from the projection part 182 of the bracket 175 and also includes the recess part 178 that is combined with the projection part 182 of the bracket 175 to restrict the displacement of the nozzle assembly 171 with respect to the first camera 111 and the second camera 112. The recess part 178 is formed on the nozzle holder 173.

Thus, the nozzle assembly 171 is not only fixed to the bracket 175, to which the first camera 111 and the second camera 112 are attached, but also combined with the projection part 182 of the bracket 175 at the recess part 178, thereby regulating displacement of the nozzle assembly 171 with respect to the first camera 111 and the second camera 112. Therefore, positional displacement of the first spray orifice 122 and the second spray orifice 124 caused by an accidental external force is prevented or adequately restrained. With the simple structure of the combination of the projection part 182 and the recess part 178, the first spray orifice 122 and the second spray orifice 124 can be held at the correct positions.

The recess part 178 of the nozzle assembly 171 and the projection part 182 of the bracket 175 are not fixed to each other. Accordingly, the projection part 182 and the recess part 178 have only to be combined without being fixed to each other, which facilitates the assembly work.

The present invention is not limited to the above-mentioned embodiments and exemplary variations, and combinations of the embodiments and exemplary variations or additional modifications, such as design changes, may be made on the basis of knowledge of those skilled in the art. It should be understood that any embodiment and exemplary variation obtained by such combinations and additional modifications are also included in the scope of the present invention. Any new embodiment made by a combination among the above-mentioned embodiments and exemplary variations or a combination among the above-mentioned embodiments, exemplary variations, and the following modifications has the effect of each of the combined embodiments, exemplary variations, and modifications.

Although the upper edge 24a and the lower edge 24b of the second spray orifice 24 are convexly curved toward the same direction as the second convex surface 14 in the aforementioned embodiments, the configuration is not limited thereto. At least one of the upper edge 24a or the lower edge 24b of the second spray orifice 24, such as at least the upper edge 24a, may be convexly curved in line with the second convex surface 14.

Also, in the aforementioned embodiments, one of the first spray orifice 22 and the second spray orifice 24, specifically the second spray orifice 24, is shaped to be convexly curved in line with the second convex surface 14; however, both the first spray orifice 22 and the second spray orifice 24 may be convexly curved. Accordingly, the nozzle includes multiple spray orifices, and each of the multiple spray orifices may be provided such that a cleaning fluid is sprayed therefrom in a fan shape onto a corresponding convex surface among multiple convex surfaces arranged around the nozzle. The shape of each spray orifice may be set such that a cleaning fluid layer of fan shape sprayed from the spray orifice has a shape convexly curved toward the same direction as the corresponding convex surface for the spray orifice.

In the aforementioned embodiments, the multiple spray orifices are each provided such that the cleaning liquid is sprayed therefrom onto a different object to be cleaned. However, instead thereof, the multiple spray orifices may be each provided such that the cleaning liquid is sprayed therefrom onto a different area of the same object to be cleaned, or onto the same area of the same object to be cleaned from a different direction.

The number of spray orifices is not particularly limited. Three or more spray orifices may be provided, or only a single spray orifice may be provided.

The arrangement and shapes of the projection part and the recess part as the displacement regulating structure are not limited to the aforementioned specific forms and may be set to various other forms. For example, in the embodiment described with reference to FIGS. 7 through 11B, the projection part 150 of H-letter shape including the two first vertical ribs 150a and one horizontal rib 150b is employed; however, the projection part 150 may only include the horizontal rib 150b without the first vertical ribs 150a, for example. Also, although the projection part 150 is formed on the back surface of the nozzle holder 144, the projection part may be formed on a side surface (the surface on the same side as the connection part 146 or the surface on the opposite side from the connection part 146) of the nozzle holder 144 instead, and the recess part to be combined with the projection part may be formed on the bracket 118.

Also, in place of a projection part, a recess part may be provided. Conversely, in place of a recess part, a projection part may be provided. For example, in the cleaner device 110 according to the embodiment described with reference to FIGS. 7 through 11B, a recess part may be formed on the nozzle assembly 120, and a projection part may be formed on the bracket 118, so that the displacement regulating structure may be formed by the recess part and the projection part combined with each other. Also, in the cleaner device 170 according to the embodiment described with reference to FIGS. 12 through 16, a projection part may be formed on the nozzle assembly 171, and a recess part may be formed on the bracket 175, so that the displacement regulating structure may be formed by the projection part and the recess part combined with each other.

In the aforementioned embodiments, a nozzle provided with a spray orifice and a nozzle holder are prepared as separate components, and the nozzle is attached to the nozzle holder. However, instead thereof, a single nozzle component in which the nozzle and the nozzle holder are formed integrally may be used.

As is the case in the embodiment described with reference to FIG. 1, also in the embodiment described with reference to FIGS. 7 through 16, the shape of one or both of the first spray orifice 122 and the second spray orifice 124 may be set such that the sprayed cleaning liquid layer of fan shape has a shape convexly curved toward the same direction as the convex surface of the corresponding object to be cleaned.

In the above-mentioned embodiments, the case where the cleaning fluid is a cleaning liquid is described as an example. However, the cleaning fluid may also be a gas such as air.

Although each of the aforementioned embodiments describes a vehicle cleaner device for cleaning a vehicle-mounted camera as an example, the object to be cleaned by the cleaner device 10 or 110 may be a vehicle-mounted sensor other than a vehicle-mounted camera, including a range sensor such as LiDAR, or may be any other vehicle-mounted device. An optical element to be cleaned may constitute part of a vehicle-mounted device as an object to be cleaned. Also, the cleaner devices 10 and 110 are not limited to vehicle use. Each cleaner device according to the embodiments may, for example, be mounted on outdoor lighting devices such as street lights, sensor devices, or various other devices and may be used to clean various objects to be cleaned provided in such devices.

The present invention has been described using specific terms based on the embodiments. However, the embodiments only show one aspect of the principle and application of the present invention, and various modifications or changes in arrangement may be made to the embodiments without departing from the spirit of the present invention defined in the claims.

### [INDUSTRIAL APPLICABILITY]

The present invention is applicable to a nozzle and a cleaner device equipped with the nozzle.

### [REFERENCE SIGNS LIST]

- 10: cleaner device

- 13: first convex surface
- 14: second convex surface
- 20: nozzle
- 22: first spray orifice
- 22a: upper edge
- 22b: lower edge
- 24: second spray orifice
- 26: cleaning liquid layer
- 26b: both ends
- 28: cleaning liquid layer
- 28b: both ends
- 110: cleaner device
- 111: first camera
- 112: second camera
- 113: first surface
- 114: second surface
- 118: bracket
- 120: nozzle assembly
- 121: first nozzle unit
- 122: first spray orifice
- 123: second nozzle unit
- 124: second spray orifice
- 142: nozzle
- 144: nozzle holder
- 150: projection part
- 150a: first vertical rib
- 150b: horizontal rib
- 160: second vertical rib
- 162: recess part

## Claims

1. A nozzle of a cleaner device that cleans an object to be cleaned having a convex surface, the nozzle comprising:
a spray orifice that is positioned outside the convex surface and from which a fan-shaped layer of a cleaning fluid is sprayed onto the convex surface, wherein
the spray orifice is shaped such that the sprayed fan-shaped layer of the cleaning fluid is convexly curved toward the same direction as the convex surface.

2. The nozzle according to claim 1, wherein an upper edge and a lower edge of the spray orifice are convexly curved toward a tip of the nozzle.

3. The nozzle according to claim 1 or 2, wherein the spray orifice is positioned such that the fan-shaped layer of the cleaning fluid hits the convex surface at one side thereof with respect to a center of the convex surface and flows along the convex surface to pass over the center of the convex surface and reach the other side of the convex surface.

4. The nozzle according to any one of claims 1 through 3, wherein the spray orifice is arranged such that circumferential ends of the sprayed fan-shaped layer of the cleaning fluid respectively travel toward points of a circumferential edge of the convex surface.

5. The nozzle according to any one of claims 1 through 4, wherein
the nozzle includes a plurality of spray orifices, each positioned such that the fan-shaped layer of the cleaning fluid is sprayed therefrom onto a corresponding convex surface among a plurality of convex surfaces arranged around the nozzle, and
the spray orifices are each shaped such that the sprayed fan-shaped layer of the cleaning fluid therefrom is convexly curved toward the same direction as the corresponding convex surface for that spray orifice.

6. A cleaner device comprising the nozzle according to any one of claims 1 through 5, wherein
the convex surface is a surface of an optical element.

7. The cleaner device according to claim 6, wherein the cleaner device is mounted on a vehicle, and the optical element constitutes part of a vehicle-mounted device as the object to be cleaned.

8. A nozzle assembly of a cleaner device which is supported by a bracket to which an object to be cleaned is attached and that includes either a first recess or a first projection, the nozzle assembly comprising:
a fixing part fixed to the bracket at a region different from either the first recess or the first projection of the bracket, and
a second projection that is combined with the first recess of the bracket, or a second recess that is combined with the first projection of the bracket, to restrict a displacement of the nozzle assembly with respect to the object to be cleaned.

9. The nozzle assembly according to claim 8, comprising:
a first nozzle provided as the fixing part and including a first spray orifice for a cleaning fluid; and
a second nozzle connected to the first nozzle and including a second spray orifice for the cleaning fluid, wherein
either the second projection or the second recess is formed on the second nozzle.

10. The nozzle assembly according to claim 8, comprising:
a nozzle including a first spray orifice and a second spray orifice from each of which a cleaning fluid is sprayed in a different direction, and
a nozzle holder to which the nozzle is attached and that includes the fixing part, wherein
either the second projection or the second recess is formed on the nozzle holder.

11. The nozzle assembly according to any one of claims 8 through 10, wherein the second projection of the nozzle assembly and the first recess of the bracket are not fixed to each other, or the second recess of the nozzle assembly and the second projection of the bracket are not fixed to each other.

12. A cleaner device comprising the nozzle assembly according to any one of claims 8 through 11.

13. The cleaner device according to claim 12, wherein the cleaner device is mounted on a vehicle, and the object to be cleaned is a vehicle-mounted device.
